# FASCICULE DE BREVET EUROPEEN

(11) **EP 0 337 038 B1**
(45) Date de publication et mention de la délivrance du brevet: **10.11.1993**
(21) Numéro de dépôt: 88400868.1
(22) Date de dépôt: 12.04.1988
(51) Int. Cl.: B62B 3/10, B60L 11/18

(54) **Dispositif de traction et de transmission pour chariots à provisions, à bagages ou de maintenance**
Antriebs- und Kraftübertragungsvorrichtung für Einkaufs-, Gepäck- oder Wartungswagen
Traction and transmission device for shopping trolleys, luggage trolleys or maintenance trolleys

(43) Date de publication de la demande: 18.10.1989
(73) Titulaire: Losego, Martine, F-19100 Brive (FR)
(72) Inventeur: Losego, Martine, F-19100 Brive (FR)
(74) Mandataire: Netter, André

(56) Documents cités:
- FR-A- 2 557 987
- FR-A- 2 587 291
- FR-A- 2 591 179
- FR-A- 2 604 662
- FR-A- 2 610 256
- US-A- 4 096 920

## Description

La présente invention concerne un dispositif de traction électrique autonome pour chariot à provisions, à bagages ou de maintenance.

Depuis plusieurs années, inventeurs et constructeurs cherchent à rajouter sur ces chariots légers, généralement construits en fil d'acier de différents diamètres, un groupe moteur permettant de fournir une traction aux roues, ce qui permettrait à l'utilisateur peu ou pas d'effort pour faire avancer ledit chariot, et, par là même, un confort d'utilisation accru.

La difficulté est représenté par la forme particulière de ces chariots, notamment ceux à provisions et à bagages qui ont été étudiés pour pouvoir s'emboîter les uns dans les autres afin de sauvegarder de la place, toujours précieuse sur un parking de supermarché ou sur un quai de gare ou d'aérogare.

On connaît déjà, en particulier d'après les documents US-A-4 096 920, FR-A-2 587 291 et FR-A-2 604 662, un chariot à provisions ou analogue, du type comprenant un châssis propre à s'emboîter dans le châssis d'un chariot qui le précède dans une file et à recevoir à emboîtement le châssis d'un chariot qui le suit dans la file, ainsi qu'un groupe de traction comportant un moteur électrique, une batterie rechargeable pour alimenter le moteur et des moyens de transmission reliés à au moins une roue motrice du chariot.

Dans le document US-A-4 096 920, on a proposé d'équiper un tel chariot à provisions d'une roue motrice unique et de prévoir, derrière le chariot, une remorque escamotable servant, d'une part, à commander le contact de la roue motrice avec le sol et, d'autre part, à transporter l'utilisateur. Celui-ci, en déplaçant son propre poids vers l'arrière de la remorque, fait débrayer la roue motrice du sol et fait agir un frein constitué par un tampon, caoutchouc ou autre, venant frotter sur le sol.

Ce dispositif connu présente différents inconvénients, notamment des risques d'accidents dus à la chute possible de l'utilisateur de la remorque. De plus, cette remorque représente une masse importante qui vient s'ajouter à la masse du chariot, d'où il résulte un inconfort d'utilisation en cas de panne. En outre, la recharge de la batterie ne peut s'effectuer que par des moyens traditionnels.

Dans le document FR-A-2 587 291, on a proposé de placer le groupe moteur directement entre les deux roues d'un même essieu du chariot. Ce groupe est, pour l'essentiel, constitué par un moteur qui entraîne un différentiel dont les axes de sortie entraînent les roues. Il s'agit d'un dispositif à entraînement direct qui comprend en outre une source d'énergie, un dispositif de contrôle de la vitesse de rotation du moteur, un frein électromagnétique ainsi qu'un frein fourni par la force contre- électromotrice du moteur.

Ce dispositif présente cependant de nombreux inconvénients : la disposition du moteur entre les roues interdit l'empilage des chariot ; il n'existe pas de réduction de vitesse entre le moteur et les roues ce qui suppose l'utilisation d'un moteur puissant pour pouvoir tourner à basse vitesse tout en fournissant un couple élevé. De plus, il n'est prévu aucune marche arrière, ce qui constitue un inconvénient lorsqu'on se trouve dans une allée entre deux étalages et que la place est insuffisante pour faire demi-tour.

Il faut noter en outre qu'il n'est prévu aucun dispositif de branchement automatique de la batterie sur un chargeur, ce qui suppose un branchement individuel et manuel de chaque chariot. L'utilisation de piles solaires pour le rechargement n'étant pas envisageable actuellement compte tenu du coût élevé de la puissance électrique, de la relative fragilité des piles solaires et de la surface active nécessaire pour obtenir une recharge dans un délai normal. Au surplus, la nuit ces piles sont inactives et, pendant la journée, elles ne fournissent pas l'équivalent du courant transformé par le moteur, la source d'énergie étant épuisée au bout de quelques jours du fait de l'effet cumulatif.

Le chariot du document FR-A-2 604 662 est muni d'un dispositif de motorisation qui permet l'empilage, tout en étant débrayable et léger. Le dispositif comporte un moteur muni d'un réducteur et entraînant un différentiel dont les axes de sortie agissent par friction sur des roues du chariot. Le dispositif comporte en outre une marche arrière par inversion des polarités du moteur à courant continu, et des moyens permettant un démarrage et un arrêt progressifs et automatiques.

Le chariot précité présente également des inconvénients : il n'est prévu aucun moyen de recharge automatique de la batterie, d'où les mêmes inconvénients que ceux déjà mentionnés. Par ailleurs, l'entraînement par friction provoque une usure rapide des galets ou des bandages des roues ainsi qu'un glissement des galets sur les roues en cas de pluie, de boue, ou d'un liquide, gras ou non, tombé accidentellement du panier. D'autre part, ce dispositif ne peut être adapté que sur des chariots à provisions.

L'invention a notamment pour but de surmonter les inconvénients précités.

Elle propose en conséquence un chariot à provisions du type mentionné précédemment, qui est caractérisé en ce qu'il comprend deux barres d'alimentation portées par le châssis du chariot, reliées respectivement aux deux pôles de la batterie d'alimentation et possédant chacune des extrémités propres à assurer un contact électrique respectivement avec les barres homologues d'un chariot qui le précède dans la file et avec les barres homologues d'un chariot qui le suit dans la file, en sorte que les deux barres d'alimentation sont alimentées électriquement lorsque les deux barres d'un premier chariot de la file sont branchées sur un chargeur électrique.

D'autres caractéristiques du chariot de l'invention résultent des revendications.

Ainsi, conformément à l'invention la recharge de la batterie du chariot s'effectue automatiquement lors de l'empilage.

Avantageusement, le chariot possède une marche avant et une marche arrière et diverses sécurités évitant les accidents. Il permet l'attelage d'un fauteuil roulant d'handicapé ; il comporte une réduction de vitesse importante augmentant le couple et permettant l'emploi d'un moteur de taille réduite et, par le jeu de cette réduction et du contrôle de vitesse du moteur, d'un dispositif de freinage.

En outre, il est avantageux d'utiliser un moteur pas à pas dont on contrôle le sens de rotation par un signal de niveau logique et sa vitesse de rotation par la fréquence d'un signal d'horloge. Il en résulte que le chariot est tributaire uniquement de ces signaux et non pas d'une variation de tension analogique ou de l'intégration d'un courant haché, aucun variateur de tension ou hacheur de courant n'étant requis.

Dans une version perfectionnée, les roues motrices du chariot sont orientables sans limitation d'angle.

Avantageusement, le groupe moteur comporte un moteur électrique pas à pas entraînant, au moyen d'un dispositif réducteur, un différentiel dont les arbres de sortie comportent soit un renvoi d'angle soit une poulie crantée. Le même groupe incorpore un dispositif de contrôle de vitesse, un dispositif de recharge automatique et éventuellement la batterie.

Dans le cas où la transmission agit sur des roues non orientables, on utilise avantageusement des courroies crantées passant sur des poulies crantées solidaires des roues.

Cependant cette disposition, si elle permet l'empilage sans perte de place, présente l'inconvénient de ne permettre l'utilisation que d'une paire de roues directrices au lieu de toutes les roues du chariot, comme c'est le cas habituellement, d'où une manoeuvrabilité moins aisée.

Pour remédier à cet inconvénient, il est possible de faire passer un axe de traction dans l'axe de pivotement du support de roue, cet axe entraînant soit un engrenage à denture inclinée disposé perpendiculaire à un deuxième engrenage du même type contenant un train épicycloïdal dont les axes de sortie entraîneraient une roue, soit une vis sans fin entrainant une roue tangente contenant également un train épicycloïdal agissant de la même manière.

Ce bâti pivotant supporterait alors deux roues parallèles entre lesquelles serait installé ou l'engrenage contenant le train épicycloïdal ou la roue tangente contenant le même dispositif ; on regagne, de ce fait, toute la manouevrabilité que l'on trouve actuellement sur ce type de chariot dépourvu, cependant, de traction.

La disposition du groupe moteur restant la même que précédemment, les axes de sortie comporteraient un renvoi d'angle en lieu et place des poulies crantées, ces renvois d'angle attaqueraient chacun un des axes de traction pouvant être assimilés à un arbre de transmission.

Cependant il est indispensable que, pour que l'empilage soit possible sur tous les chariots sans distinction de modèle ou de type, les moyens de transmission mis en oeuvre soient disposés suivant les montants disposés entre le chassis et le panier ou le plateau ou la plateforme ou encore suivant les longerons constituant le chassis lui-même.

De la sorte l'empilage peut se faire comme si le dispositif de transmission n'existait pas puisque le chariot qui précède dans l'empilage ne "verra" que ces longerons ou que ces montants et que celui qui suit ne présentera que la même chose.

La transmission vers les roues orientables se fait par arbres et cardans ou arbres et renvoi d'angle ou par ces deux techniques panachées ou conjuguées.

Cependant il est impératif de pouvoir arrêter la traction si l'avant du chariot venait à heurter un obstacle ou les chevilles d'une personne, pour ce faire on peut utiliser une sorte de parechocs qui commande au moyen d'un interrupteur poussoir l'arrêt immédiat du moteur ; ce parechocs est monté sur des glissières et est mobile vers l'arrière, tout en étant rappelé vers sa position initiale par des ressorts fournissant un effort assez faible.

Il est également à considérer le fait que le dispositif, malgré ses performances, serait inadapté à l'utilisation par un handicapé sans une adaptation convenable, ce type d'utilisateur est le moins fréquent du fait que,lorsque l'handicapé ne possède pas l'usage de ses jambes, il lui est quasiment impossible de manoeuvrer un chariot à provisions ou à bagages puisqu'il doit en même temps manoeuvrer son fauteuil roulant, c'est pourquoi le dispositif de traction est complété par une adaptation permettant à l'handicapé non seulement de ne pas pousser le chariot mais au contraire de se faire tracter par lui.

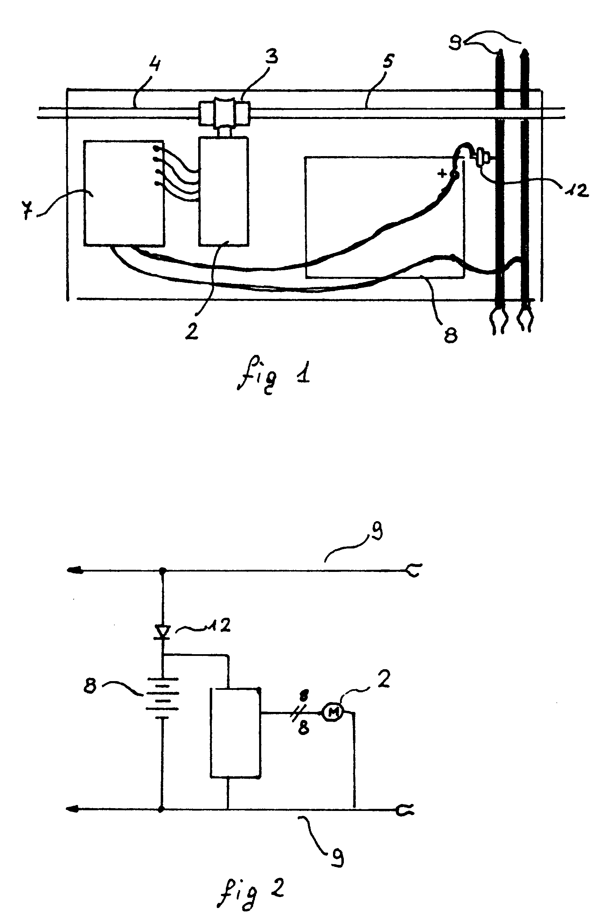

La figure 1 représente le groupe moteur (1), le carter supposé transparent, permet de voir les éléments composant le groupe : un moteur pas-à-pas (2) entraîne, au moyen d'un dispositif connu de réduction, un différentiel (3) dont les arbres (4) et (5) de sortie traversent le carter (6) pour atteindre le dispositif de transmission (47). A l'intérieur du groupe on trouve également la logique (7) de commande du moteur et des batteries (8) d'alimentation rechargées au moyen de barres (9) dont les parties males (10) s'emboîtent dans les parties femelles (11) du chariot qui précède dans l'empilage et dont les parties femelles reçoivent les parties males du chariot qui suit dans l'empilage, de la sorte que lorsque le premier chariot de la pile est branché sur le chargeur, tous les chariots sont rechargés en parallèle ; cependant pour éviter des court-circuits, volontaires ou non, entre le positif de la batterie et la masse et surtout pour éviter que la batterie chargée d'un chariot ne se décharge par la barre dans les batteries des autres chariots en charge, on place une diode (12) entre la barre positive et le pôle positif de la batterie (8) de telle sorte qu'elle ne permette le passage du courant que lorsque sur la barre existe une tension supérieure à celle de cette borne de la batterie.

Une disposition du groupe moteur à l'avant du chariot et avec une traction antérieure ne serait pas satisfaisante du fait que la manoeuvrabilité du chariot s'en trouverait affectée, par contre une disposition à l'avant du groupe moteur est valable si la traction se fait sur les roues arrière au moyen d'arbres ou de courroies crantées disposés suivant le chassis supportant les roues.

La transmission peut être disposée suivant les montants supportant le panier, ou la plateforme, de manière à permettre l'empilage, le groupe moteur serait fixé à la partie inférieure arrière du panier ou, sur les chariots à bagages ou de maintenance, à la verticale des roues arrière directement sur la partie montante aboutissant à la poignée de guidage ou servant à caler les marchandises transportées.

La figure 2 représente le circuit électrique des barres d'alimentation (9) avec la diode (12) en série sur le pôle positif de la batterie (8).

Les figures 3 et 4 représentent les éléments du dispositif de transmission dans sa version à courroie crantée ; pour la clarté du texte et des dessins, seul un côté est représenté et décrit, l'autre côté étant identique quant au fonctionnement .

Un axe de sortie (4) d'un différentiel (3) incorporé dans le groupe moteur (2) entraine une poulie crantée (13) autour de laquelle passe une courroie crantée (14) qui entraine une poulie crantée (15) coaxiale et solidaire de la roue (16) supportée par un pivot (17) passant dans une cage à aiguilles (18) et traversant les deux demi supports (19) et (20) et la poulie crantée (15) solidaire du corps de roue.

La transmission entre la poulie (13) et la poulie (15) pouvant entraîner ou non une réduction suivant le rapport des diamètres, il reste évident que le synchronisme est maintenu par le crantage des poulies et de la courroie et que, par conséquent, aucun glissement ou patinage de la courroie n'est possible.

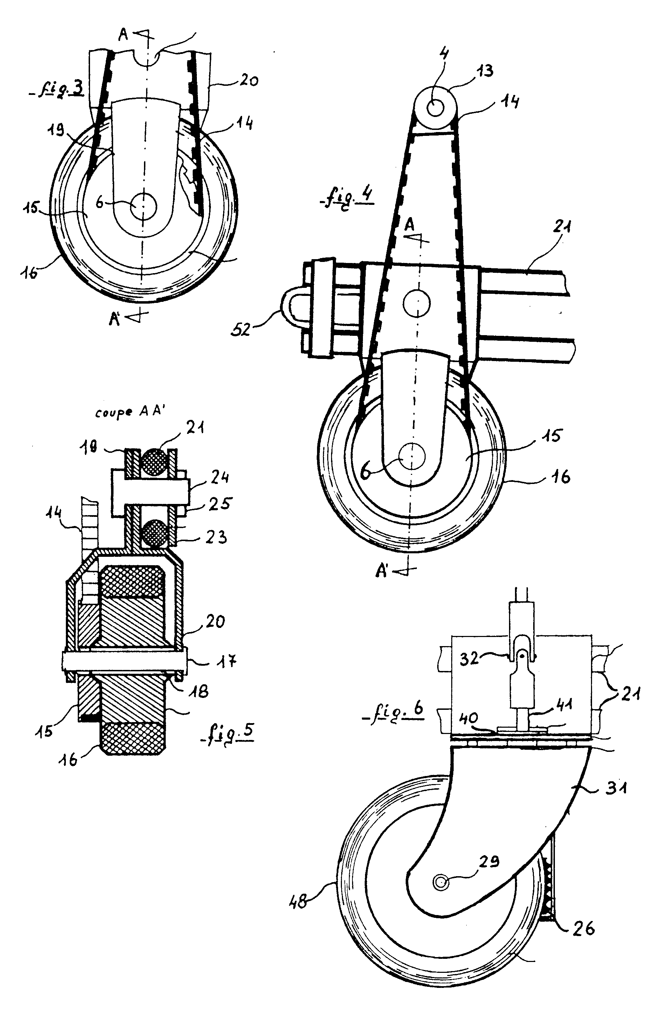

La figure 5 représente une vue en coupe suivant AA' de la figure 3 ou de la figure 4 indifféremment, cette dernière présentant en outre une vue partiellement arrachée de la poulie crantée.

Cette même figure 5 montre un moyen de fixation du support constitué des parties (19) et (20) au chassis (21) du chariot reposant sur un épaulement (22) du demi support (20) et maintenu par pincement entre ce même demi support et une joue (23) assemblés à l'aide d'un boulon (24) bloqué par un écrou (25).

Les figures (6) et (7) représente une version de la transmission agissant sur une roue orientable (48) sans limitation d'angle d'orientation.

Dans cette deuxième version il existe deux possibilités : la première consiste à utiliser une vis sans fin (26) couplée à une roue tangente (27) incorporant un train épicycloïdal (28) dont les deux axes de sortie (29) et (30) entraînent chacun une roue ; le support orientable (31) contient, de ce fait, deux roues disposées de part et d'autre de la roue tangente (27).

Pour pouvoir effectuer la transmission de la traction fournie par le groupe moteur (1) vers la vis sans fin (26) sans limiter l'angle d'orientation du support il est indispensable que l'axe d'entraînement (41) soit concentrique à l'axe (40) d'orientation, pour ce faire, ce dernier sera creux, l'arbre de transmission (41) sera entraîné soit au moyen de cardans (32) soit par un couple conique (33), au choix, indifféremment et en fonction de l'emplacement du groupe moteur (1) par rapport au bâti-support servant à fixer le dispositif au chassis du chariot.

Les arbres de sortie (4) du groupe moteur (1) entraînent les arbres de transmission (44) et (45) au moyen de renvois d'angle (43) et (46).

En disposant un train épicycloïdal (28) entre une paire de roues orientable, celles-ci peuvent rouler à des vitesses différentes et même en sens inverse l'une par rapport à l'autre, ce qui permet une orientation du support (31) autour de son axe, indépendamment qu'il y ait ou non une traction en cours.

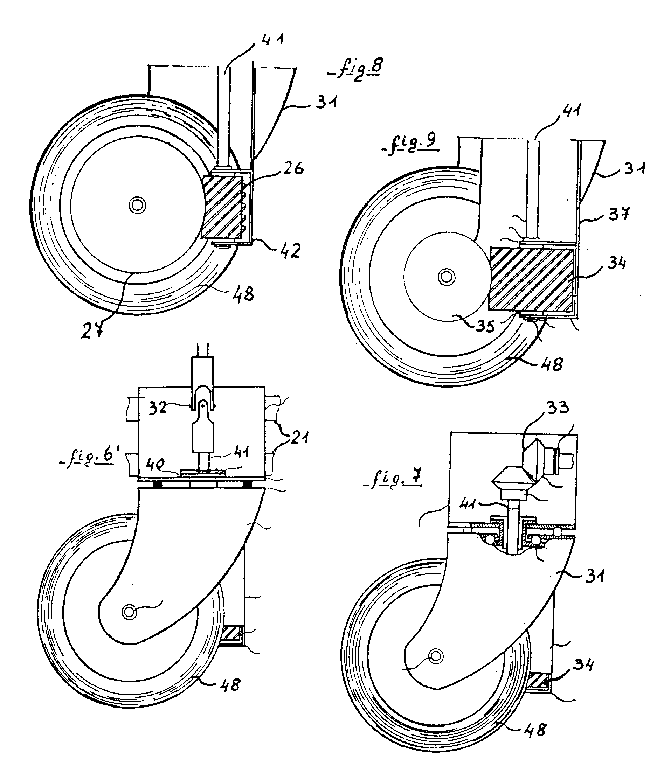

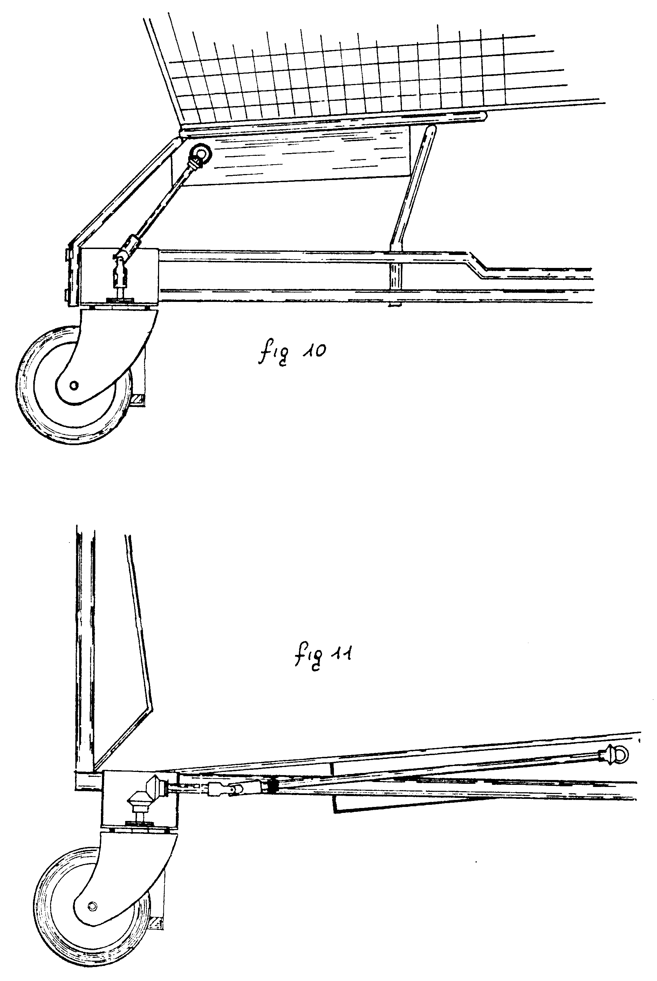

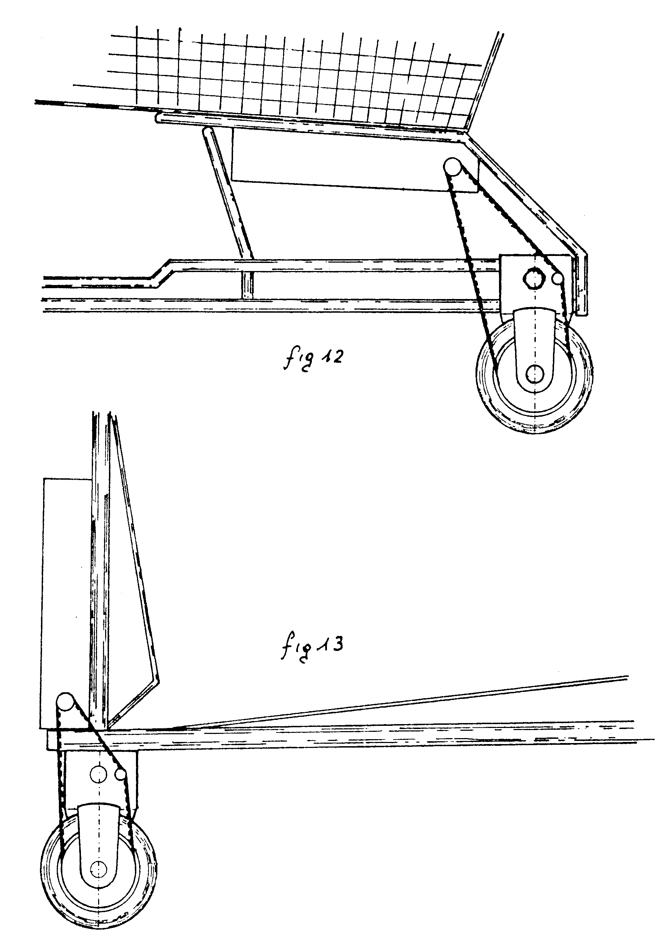

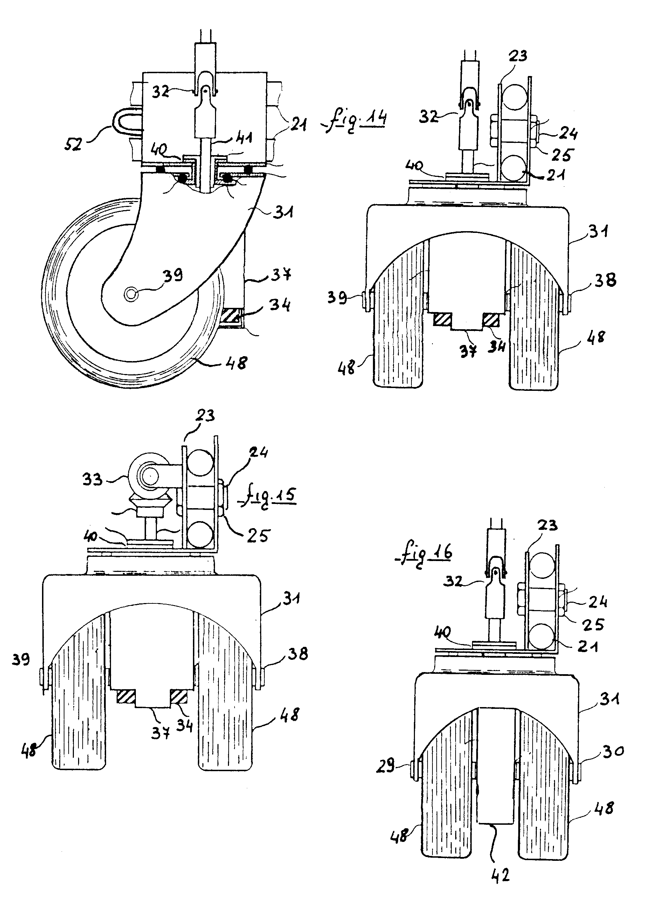

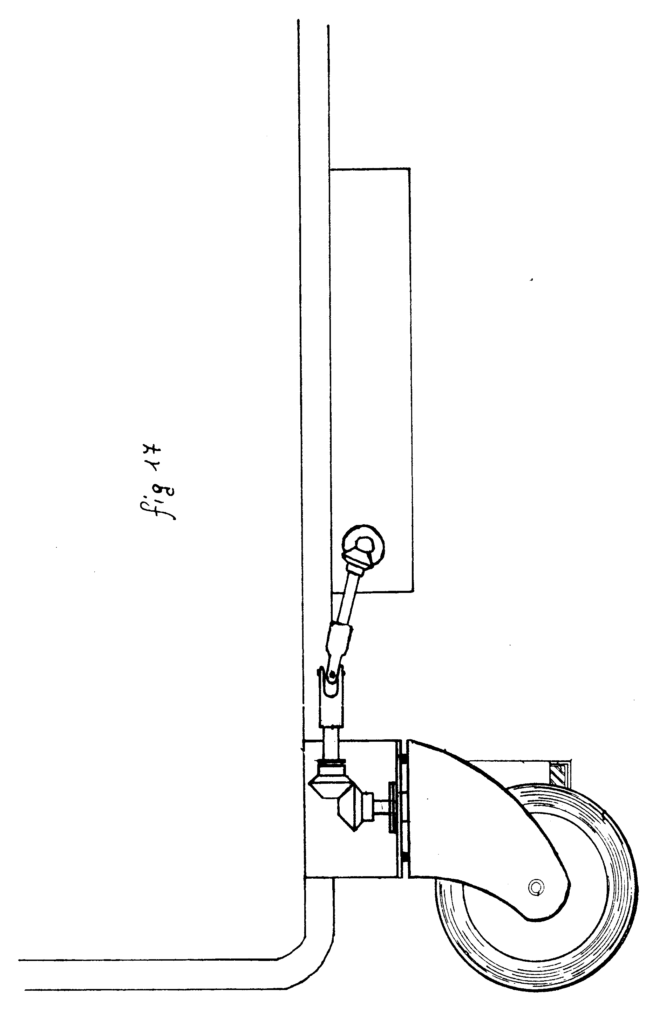

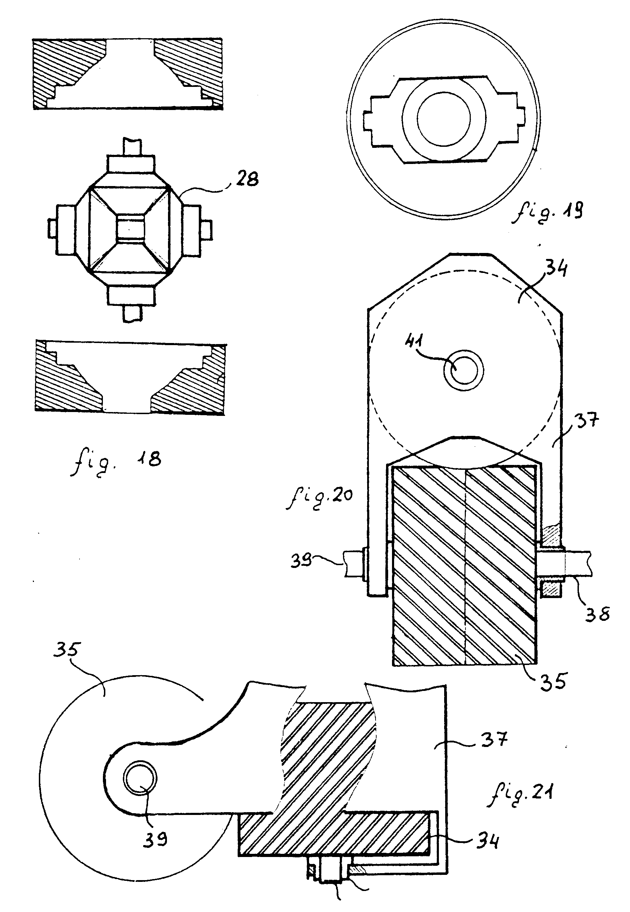

La figure 8 montre la disposition dans cette configuration, roue tangente partiellement arrachée afin de montrer le train épicycloïdal (28).

On y remarque la vis sans fin (26) entrainée par l'arbre (41) concentrique de l'axe (40) d'orientation du support (31) ; la vis sans fin (26) entraîne à son tour la roue tangente (27) contenant le train épicycloïdal (28) dont les axes de sortie (29) et (30) transmettent le mouvement aux roues, le support (42) de vis sans fin maintient celle-ci correctement positionnée et est solidaire du support orientable (31).

Une variante représentée sur la figure 9 utilise en lieu et place de la vis sans fin (26) et de la roue tangente (27) doux engrenages hélicoïdaux montés perpendiculaires l'un par rapport à l'autre, l'engrenage entraînant (34) agira sur l'engrenage entraîné (35) contenant un train épicycloïdal (36), les autres éléments restant inchangés ; cependant vu l'écartement plus important entre les roues jumelées il sera indispensable d'ajouter un support auxiliaire (37) supportant les axes (38 et (39) de part et d'autre de l'engrenage entrainé (35), ce support auxiliaire sera solidarisé par des moyens mécaniques au support principal orientable (31).

Les figures 10 à 17 représentent les possibilités d'installation sur différents types de chariots à provisions, à bagages et de maintenance.

Les figures 18 à 21 montrent un mode de réalisation de l'engrenage entraîné (35) contenant le train épicycloïdal et la disposition des engrenages (34) (35) dans le support auxiliaire (37).

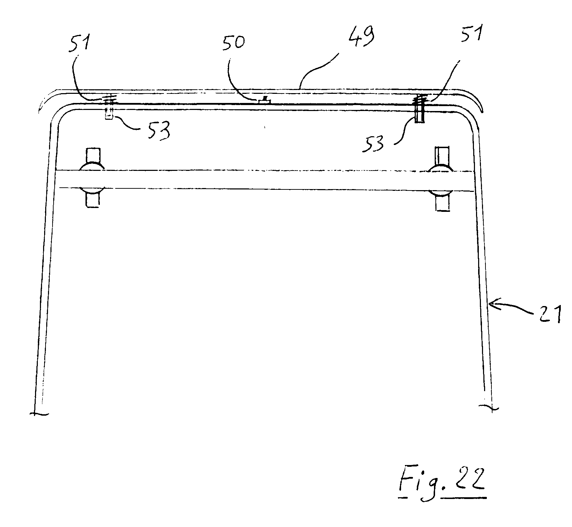

Le dispositif de traction est complété par une sécurité constituée par une barre transversale (49) à l'avant du chariot agissant sur un bouton poussoir (50) qui commande l'arrêt immédiat du moteur, cette barre coulisse sur des glissières (53) et ramenée à sa position initiale par l'action de ressorts faibles (51) lorsqu'aucune pression n'est exercée sur la barre. (figure 22)

Afin de permettre l'utilisation des chariots à provisions ou à bagages par les handicapés, le bâti de la roue fixe (16) ou la partie fixe du bâti de la roue orientable (48) comporte un anneau d'attelage (52) auquel pourra être accroché un timon ou autre dispositif permettant le remorquage d'un fauteuil roulant.

## Revendications

1. Chariot à provisions ou analogue, comprenant un châssis propre à s'emboîter dans le châssis d'un chariot qui le précède dans une file et à recevoir à emboîtement le châssis d'un chariot qui le suit dans la file, ainsi qu'un groupe de traction comportant un moteur électrique, une batterie rechargeable pour alimenter le moteur et des moyens de transmission reliés à au moins une roue motrice du chariot, caractérisé en ce qu'il comprend deux barres d'alimentation (9) portées par le châssis (21) du chariot, reliées respectivement aux deux pôles de la batterie d'alimentation (8) et possédant chacune des extrémités (10,11) propres à assurer un contact électrique respectivement avec les barres homologues d'un chariot qui le précède dans la file et avec les barres homologues d'un chariot qui le suit dans la file, en sorte que les deux barres d'alimentation (9) sont alimentées électriquement lorsque les deux barres d'un premier chariot de la file sont branchées sur un chargeur électrique.

2. Chariot selon la revendication 1, caractérisé en ce que l'une des barres d'alimentation (9) est reliée au pôle positif de la batterie d'alimentation (8) par l'intermédiaire d'une diode (12) qui n'autorise le passage d'un courant électrique que dans le cas où ladite barre présente une tension électrique supérieure à la tension du pôle positif de la batterie d'alimentation (8).

3. Chariot selon l'une des revendications 1 et 2, caractérisé en ce que chacune des barres d'alimentation (9) comporte une extrémité mâle (10) propre à s'engager dans une extrémité femelle (11) d'une barre du chariot qui le précède dans la file et une extrémité femelle (11) propre à recevoir une extrémité mâle (10) d'une barre d'alimentation du chariot qui le suit dans la file.

4. Chariot selon l'une des revendications 1 à 3, caractérisé en ce que les barres d'alimentation (9) permettent une recharge en parallèle des batteries d'alimentation respectives (8) de tous les chariots de la file.

5. Chariot selon l'une des revendications 1 à 4, caractérisé en ce que le groupe de traction (1) comporte un différentiel (3) entraîné par le moteur électrique (2) et ayant deux arbres de sortie (4,5) dont chacun est couplé à au moins une roue (16,48) par l'intermédiaire de moyens de transmission.

6. Chariot selon la revendication 5, caractérisé en ce que chacun des arbres de sortie (4,5) du différentiel (3) est muni d'une poulie crantée (13) entraînant, par l'intermédiaire d'une courroie crantée (14), une poulie crantée (15) coaxiale et solidaire en rotation d'une roue (16) non orientable du chariot.

7. Chariot selon la revendication 5, caractérisé en ce que chacun des arbres de sortie (4,5) du différentiel (3) entraîne un arbre de transmission vertical (44,45) monté coaxialement dans un axe d'orientation creux (40) portant un support orientable (31) pour une roue motrice orientable (48), cet arbre de transmission vertical entraînant en rotation ladite roue motrice orientable (48).

8. Chariot selon la revendication 7, caractérisé en ce que chacun des arbres de transmission (44,45) est entraîné par un arbre de sortie (4,5) par l'intermédiaire d'un cardan (54) et/ou d'un couple conique (55).

9. Chariot selon la revendication 7, caractérisé en ce que l'arbre de transmission vertical (44,45) est muni d'une vis sans fin (26) qui entraîne en rotation une roue tangente (27) contenant un train épicycloïdal (28) ayant deux axes de sortie (29,30) entraînant respectivement deux roues jumelées (48) portées par le support orientable (31).

10. Chariot selon la revendication 9, caractérisé en ce que la vis sans fin (26) est maintenue en position axiale par un support (42) solidaire du support orientable (31).

11. Chariot selon la revendication 7, caractérisé en ce que l'arbre de transmission vertical (44,45) est muni d'un engrenage hélicoïdal (34) qui entraîne un engrenage hélicoïdal (35) contenant un train épicycloïdal (36) ayant deux axes de sortie (29,30) entraînant respectivement deux roues jumelées (48) portées par le support orientable (31).

12. Chariot selon l'une des revendications 5 à 11, caractérisé en ce que les moyens de transmission sont disposés suivant des montants ou des longerons du châssis (21) du chariot.

13. Chariot selon l'une des revendications 1 à 12, caractérisé en ce qu'il comprend un anneau d'attelage (52) fixé à un support d'une roue du chariot et permettant le remorquage d'un fauteuil roulant d'handicapé.

14. Chariot selon l'une des revendications 1 à 13, caractérisé en ce qu'il comporte une barre transversale (49) montée a l'avant du chariot par l'intermédiaire de glissières (53) et rappelée vers une position initiale par des ressorts (51), et en ce que cette barre transversale agit sur un interrupteur à poussoir (50) propre à arrêter le fonctionnement du moteur (2) lorsque cette barre subit une pression l'écartant de sa position initiale et propre à remettre en fonctionnement le moteur lorsque cette barre revient à sa position initiale sous l'action des ressorts (51).

## Claims

1. Shopping trolley or the like comprising a chassis capable of nesting in the chassis of a trolley which is in front of it in a line and of receiving nested in it, the chassis of a trolley following it in the line, as well as a traction unit including an electric motor, a rechargeable battery for supplying the motor, and transmission means connected to at least one driving wheel of the trolley, characterized in that it comprises two supply bars (9) carried by the chassis (21) of the trolley, respectively connected to the two poles of the supply battery (8) and each one having ends (10, 11) suitable for providing an electrical contact respectively with the similar bars of a trolley which is in front of it in the line and with the similar bars of a trolley which follows it in the line, so that the two supply bars (9) are supplied electrically when the two bars of a first trolley in the line are connected to an electric charger.

2. Trolley according to Claim 1, characterized in that one of the supply bars (9) is connected to the positive pole of the supply battery (8) by means of a diode (12) which allows the passage of an electrical current only in the case where the said bar has an electric voltage which is greater than the voltage of the positive pole of the supply battery (8).

3. Trolley according to one of Claims 1 and 2, characterized in that each of the supply bars (9) includes a male end (10) capable of being engaged in a female end (11) of a bar of the trolley which is in front of it in the line and a female end (11) capable of receiving a male end (10) of a supply bar of the trolley following it in the line.

4. Trolley according to one of Claims 1 to 3, characterized in that the supply bars (9) allow the respective supply batteries (8) of all the trolleys in the line to be recharged in parallel.

5. Trolley according to one of Claims 1 to 4, characterized in that the traction unit (1) includes a differential (3) driven by the electric motor (2) and having two output shafts (4, 5) each of which is coupled to at least one wheel (16, 48) by means of transmission means.

6. Trolley according to Claim 5, characterized in that each of the output shafts (4, 5) of the differential (3) is provided with a toothed pulley (13) driving, by means of a toothed belt (14), a toothed pulley (15) which is coaxial with, and rotationally secured to, a non-orientable wheel (16) of the trolley.

7. Trolley according to Claim 5, characterized in that each of the output shafts (4, 5) of the differential (3) drives a vertical transmission shaft (44, 45) mounted coaxially in a hollow orientation shaft (40) carrying an orientable support (31) for an orientable driving wheel (48), this vertical transmission shaft rotationally driving the said orientable driving wheel (48).

8. Trolley according to Claim 7, characterized in that each of the transmission shafts (44, 45) is driven by an output shaft (4, 5) by means of a universal joint (54) and/or by means of a pair of bevel gears (55).

9. Trolley according to Claim 7, characterized in that the vertical transmission shaft (44, 45) is provided with a worm (26) which rotationally drives a wormwheel (27) containing an epicycloid gear train (28) having two output shafts (29, 30) respectively driving two twinned wheels (48) carried by the orientable support (31).

10. Trolley according to Claim 9, characterized in that the worm (26) is held in the axial position by a support (42) which is secured to the orientable support (31).

11. Trolley according to Claim 7, characterized in that the vertical transmission shaft (44, 45) is provided with a helical gear (34) which drives a helical gear (35) containing an epicycloid gear train (36) having two output shafts (29, 30) respectively driving two twinned wheels (48) carried by the orientable support (31).

12. Trolley according to one of Claims 5 to 11, characterized in that the transmission means are located along uprights or longitudinal members of the chassis (21) of the trolley.

13. Trolley according to one of Claims 1 to 12, characterized in that it comprises a hitching ring (52) fixed to a support of a wheel of the trolley and allowing a wheelchair to be towed.

14. Trolley according to one of Claims 1 to 13, characterized in that it includes a transverse bar (49) mounted at the front of the trolley by means of slide ways (53) and returned to an initial position by springs (51), and in that this transverse bar acts on a push-button switch (50) capable of stopping the operation of the motor (2) when this bar undergoes a pressure moving it away from its initial position and capable of resuming the operation of the motor when this bar returns to its initial position under the action of the springs (51).

## Patentansprüche

1. Einkaufswagen oder dergleichen, der ein Gestell umfaßt, das so ausgelegt ist, daß es in das Gestell eines sich in einer Reihe vor ihm befindenden Wagens hineingeschoben werden kann und daß es das hineinzuschiebende Gestell eines ihm in der Reihe folgenden Wagens aufnehmen kann, sowie ein Antriebsaggregat, das einen Elektromotor, eine aufladbare Batterie zur Versorgung des Motors und mit mindestens einem Antriebsrad des Wagens verbundene Kraftübertragungsmittel enthält, dadurch gekennzeichnet, daß er zwei von dem Gestell (21) des Wagens getragene Versorgungsschienen (9) aufweist, die jeweils mit den beiden Polen der Versorgungsbatterie (8) verbunden sind und jeweils Enden (10, 11) aufweisen, die so ausgelegt sind, daß sie einen elektrischen Kontakt mit den jeweils entsprechenden Schienen eines sich in der Reihe vor ihm befindenden Wagens und mit den entsprechenden Schienen eines ihm in der Reihe folgenden Wagens herstellen, so daß die beiden Versorgungsschienen (9) elektrisch versorgt werden, wenn die beiden Schienen eines ersten Wagens der Reihe an ein elektrisches Ladegerät angeschlossen werden.

2. Wagen nach Anspruch 1, dadurch gekennzeichnet, daß eine der Versorgungsschienen (9) über eine Diode (12) mit dem Pluspol der Versorgungsbatterie (8) verbunden ist, wobei die Diode nur dann Strom durchläßt, wenn die Schiene eine elektrische Spannung aufweist, die höher ist als die Spannung des Pluspols der Versorgungsbatterie (8).

3. Wagen nach Anspruch 1 oder 2, dadurch gekennzeichnet, daß jede der Versorgungschienen (9) ein als Einsteckteil (10) ausgebildetes Ende aufweist, das so ausgelegt ist, daß es in ein als Aufnahmeteil (11) ausgebildetes Ende einer Schiene des sich in der Reihe vor ihm befindenden Wagens eingreifen kann, sowie ein als Aufnahmeteil (11) ausgebildetes Ende, das so ausgelegt ist, daß es ein als Einsteckteil (10) ausgebildetes Ende einer Versorgungsschiene des ihm in der Reihe folgenden Wagens aufnehmen kann.

4. Wagen nach einem der Ansprüche 1 bis 3, dadurch gekennzeichnet, daß die Versorgungsschienen (9) ein paralleles Aufladen der jeweiligen Versorgungsbatterien (8) aller Wagen der Reihe erlauben.

5. Wagen nach einem der Ansprüche 1 bis 4, dadurch gekennzeichnet, daß das Antriebsaggregat (1) ein Differentialgetriebe (3) enthält, das von dem Elektromotor (2) angetrieben wird und zwei Antriebswellen (4, 5) aufweist, von denen jede über Kraftübertragungsmittel an mindestens ein Rad (16, 48) gekoppelt ist.

6. Wagen nach Anspruch 5, dadurch gekennzeichnet, daß jede der Abtriebswellen (4, 5) des Differentialgetriebes (3) mit einer Zahnriemenscheibe (13) ausgestattet ist, die über einen Zahnriemen (14) eine Zahnriemenscheibe (15) antreibt, die mit einem nicht ausrichtbaren Rad (16) des Wagens koaxial und drehfest verbunden ist.

7. Wagen nach Anspruch 5, dadurch gekennzeichnet, daß jede der Abtriebswellen (4, 5) des Differentialgetriebes (3) eine vertikale Kraftübertragungswelle (44, 45) antreibt, die koaxial in einer eine ausrichtbare Stütze (31) für ein ausrichtbares Antriebsrad (48) tragenden hohlen Ausrichteachse (40) angebracht ist, wobei die vertikale Kraftübertragungswelle das ausrichtbare Antriebsrad (48) drehend antreibt.

8. Wagen nach Anspruch 7, dadurch gekennzeichnet, daß jede der Kraftübertragungswellen (44, 45) über ein Kardangelenk (54) und/oder ein Kegelradpaar (55) von einer Abtriebswelle (4, 5) angetrieben wird.

9. Wagen nach Anspruch 7, dadurch gekennzeichnet, daß die vertikale Kraftübertragungswelle (44, 45) mit einer Schnecke (26) ausgestattet ist, die ein Schneckenrad (27) drehend antreibt, das ein Umlaufgetriebe (28) mit zwei Abtriebswellen (29, 30) enthält, die jeweils zwei von der ausrichtbaren Stütze (31) getragene Zwillingsräder (48) antreiben.

10. Wagen nach Anspruch 9, dadurch gekennzeichnet, daß die Schnecke (26) von einer mit der ausrichtbaren Stütze (31) fest verbundenen Stütze (42) in axialer Stellung gehalten wird.

11. Wagen nach Anspruch 7, dadurch gekennzeichnet, daß die senkrechte Kraftübertragungswelle (44, 45) mit einem Schraubenradgetriebe (34) ausgestattet ist, das ein Schraubenradgetriebe (35) antreibt, welches ein Umlaufgetriebe (36) mit zwei Abtriebswellen (29, 30) enthält, die jeweils zwei von der ausrichtbaren Stütze (31) getragene Zwillingsräder (48) antreiben.

12. Wagen nach einem der Ansprüche 5 bis 11, dadurch gekennzeichnet, daß die Kraftübertragungsmittel entlang Ständern oder Längsträgern des Gestells (21) des Wagens angeordnet sind.

13. Wagen nach einem der Ansprüche 1 bis 12, dadurch gekennzeichnet, daß er eine Zugöse (52) umfaßt, die an einer Stütze eines Wagenrads befestigt ist und das Anhängen eines Rollstuhls erlaubt.

14. Wagen nach einem der Ansprüche 1 bis 13, dadurch gekennzeichnet, daß er einen Querträger (49) aufweist, die über Gleitschienen (53) vorne am Wagen befestigt ist und über Federn (51) in eine Anfangsposition zurückgebracht wird, und daß dieser Querträger auf einen Druckschalter (50) einwirkt, der so ausgelegt ist, daß er den Betrieb des Motors (2) unterbrechen kann, wenn dieser Träger einen Druck erfährt, der ihn aus seiner Anfangsstellung bringt, und der so ausgelegt ist, daß er den Motor wieder in Betrieb setzen kann, wenn dieser Träger wieder unter Wirkung der Federn (51) in seine Anfangsstellung zurückkehrt.
